# EUROPEAN PATENT SPECIFICATION

(11) **EP 0 567 197 B1**
(45) Date of publication and mention of the grant of the patent: **21.01.1998**
(21) Application number: 93201172.9
(22) Date of filing: 22.04.1993
(51) Int. Cl.: F26B 17/04, F26B 21/06

(54) **A method for drying solid foodstuffs and a device for carrying out said method**
Verfahren zur Trocknung von festen Nahrungsmitteln und Vorrichtung zur Durchführung des Verfahrens
Procédé pour le séchage de produits alimentaires solides et dispositif pour la mise en oeuvre de ce procédé

(30) Priority: 23.04.1992 NL 9200740
(43) Date of publication of application: 27.10.1993
(73) Proprietor: BACKUS BEHEER B.V., NL-5916 PS Venlo (NL)
(72) Inventor: Stevens, Petrus Johannes Maria, NL-5437 BE Beers (NL); Peeters, Hubertus Gertruda Cornelis, NL-5963 NS Hegelsom (NL)
(74) Representative: Bartelds, Erik

(56) References cited:
- EP-A- 0 079 523
- EP-A- 0 271 376
- BE-A- 458 127
- GB-A- 336 009
- GB-A- 1 090 063
- NL-A- 7 905 532
- US-A- 1 352 377

## Description

The present invention relates to a method for drying solid foodstuffs, like e.g. vegetables after washing thereof. In particular the invention relates to a method for drying sliced vegetables following industrial slicing and washing of these vegetables in a vegetables slicing and washing plant. This applies for example to carrots, potatoes, cauliflower, lettuce and the like. The principle underlying this method can also be used for other vegetables and foodstuffs in their solid condition, however.

The system presently used for drying such vegetables following washing comprises a discontinuous process, wherein use is made of a centrifuge. The drawbacks of this drying mode are that the product to be dried is damaged by the rotating drum and by the forces which the products exert on each other, with the damaged parts and parts come loose remaining behind in the centrifuge, as a result of which the centrifuge may become unbalanced and less hygienic, due to possible bacterial infection.

From EP-A-0 271 376 a method for drying solid foodstuffs, in particular plums is known in which the foodstuffs are supplied to a conveyor by which they are moved into an oven. There the foodstuffs are dried in a single step by supplying a gas and urging said gas through or along the foodstuffs in a direction substantially perpendicularly to the conveyor by means of a fan. The gas is passed through a heater in order to adjust its humidity before being supplied through or along the foodstuffs, and each time after being passed through or along the foodstuffs the humid gas is cooled down, the absorbed water vapour is removed and the gas is recirculated. After drying the foodstuffs are discharged, packed and/or further processed. This known drying method is a single step process, and does not teach any variation of the temperature along the conveyor. This cited prior art document does not mention any values for the temperature of the drying gas or the foodstuffs to be dried either.

The present invention has for its object to provide an improved method for drying solid foodstuffs. To this end, the invention provides a method for drying solid foodstuffs, comprising the steps of: supplying the foodstuffs to a conveyor belt or shaker conveyor, moving said conveyor belt or shaker conveyor carrying said foodstuffs along a plurality of drying locations, supplying a relatively cool drying gas to a first of said drying locations, at said drying location passing the gas through at least one heater in order to adjust its humidity and urging said gas through or along the foodstuffs in a direction substantially perpendicularly to the conveyor belt or shaker conveyor by means of at least one fan, supplying said gas to a subsequent drying location and repeating step d) at that location, cooling the gas, removing the absorbed water vapour and redirecting the gas to the first location, and discharging, packing and/or further processing the dried foodstuffs, the temperature of the drying gas and its humidity decreasing in the direction of movement of said conveyor belt or shaker conveyor, and the temperature of the foodstuffs during drying not exceeding 40°C.

By drying the foodstuffs in several steps and at decreasing temperatures an efficient drying process is obtained.

Preferred embodiments of the method of the present invention form the subject matter of the dependent claims 2 to 7.

It should be noted that from EP-A-0 079 523 a device and process is known for drying solid particles in a suspension, urban sludges, non-edible waste or such materials, while the example is directed to drying untreated wool. The essential feature of this known device is especially the use of a heat pump. Drying with this known process takes place at substantially higher temperatures (about 100°C) than necessary and desired for drying foodstuffs such as vegetables (temperature not higher than 40°C) and for this reason the device and method as disclosed in this prior art document cannot be used for drying vegetables or more in general for drying foodstuffs.

The invention also relates to a device for carrying out the method as set out above. In accordance with the invention, this device comprises a perforated conveyor belt or shaker conveyor for moving foodstuffs to be dried from a supply end to a discharge end of the device, a plurality of fans being arranged adjacent the conveyor belt or shaker conveyor for urging a gas to flow through the conveyor belt or shaker conveyor and a plurality of heaters being arranged adjacent the conveyor belt or shaker conveyor and connected to respective fans for adjusting the humidity of the gas urged through the conveyor belt or shaking conveyor, and a plurality of coolers for cooling the gas after drying and removing the absorbed water vapour therefrom, said coolers being connected by a line to at least one heater arranged at a first drying location and the respective fan cooperating with said heater for urging the gas from the heater through the conveyor belt or shaker conveyor being connected by a return line to at least one further subsequent heater arranged at a subsequent location, said heater being connected via at least one further fan to said coolers.

Preferred embodiments of such a device are described in the dependent claims 9, 10 and 11.

The invention will be explained in more detail hereafter in the following description, wherein reference is made to the appended drawing, in which:

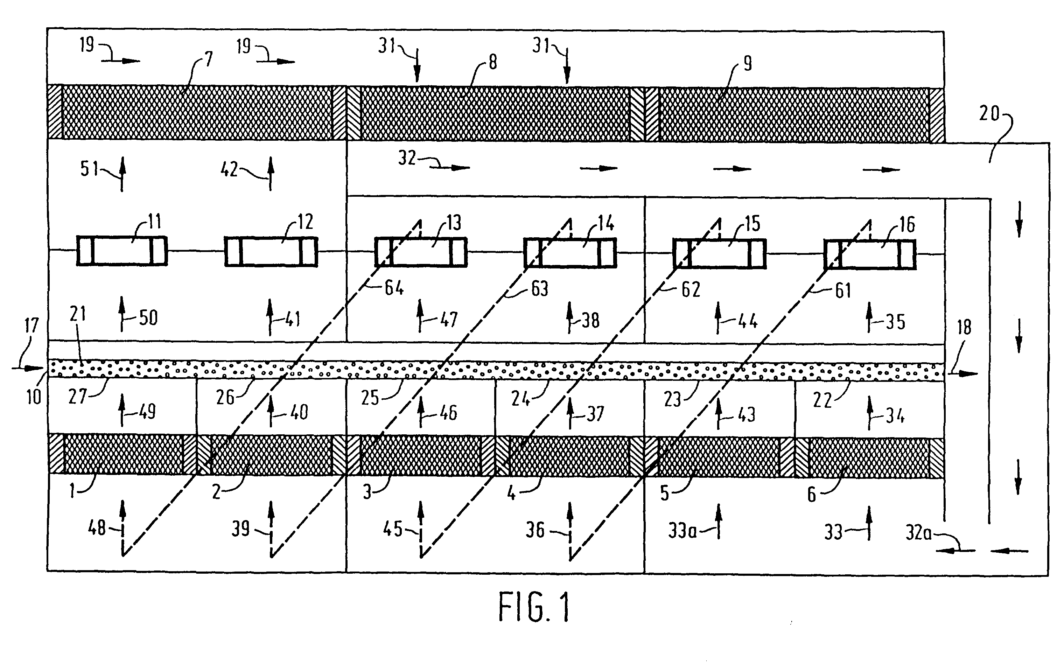

Figure 1 diagrammatically illustrates the operation of the drier according to the invention.

In the drawing the device is shown to comprise six successive heaters 1 - 6, coolers 7, 8 and 9 and fans 11 - 16. It will be apparent, however, that it is also possible to use a larger or a smaller number of heaters, fans and coolers, dependent on the foodstuff or product to be dried, the nature and the humidity thereof, the temperature at the supply point and the desired temperature at the discharge point and the manner in which the foodstuff is stacked on the conveyor belt. The optimum number of heaters, coolers and fans can be adjusted by a person skilled in this field of the art, also in dependence on the capacity of the coolers, heaters and fans.

The following explanation of the system is only by way of example, therefore. The product to be dried, such as sliced carrots or lettuce, is supplied at arrow 17 by means of the perforated conveyor belt 10 or a perforated shaker conveyor 10 and, after drying, discharged at the other side, indicated by the arrow 18. Air is used as the cooling gas, said air being supplied at 19 and having a humidity of 100% and a temperature of for example 5 °C. This air flow is passed through the cooler 8 at 31, whereby the air is cooled down to -5 °C. A large part of the water vapour contained condenses thereby and freezes on to the cooler 8. That is why the cooler 9 is arranged beside the cooler 8, so that when the cooler 8 has built up too much resistance as a result of icing, the cooler 9 can be used and the cooler 8 can be defrosted. The air obtained at 32 has a temperature of -5 °C and a relative humidity of 100%. This cold air is supplied to the heater 6 and the heater 5 by means of the line 20. Different temperatures are set for these two heaters, so that, seen in the longitudinal direction of the conveyor belt, drying of the product to be dried takes place from the starting point 17 to the end point 18 with air exhibiting a decreasing temperature and, along the first part, a decreasing moisture content. Upon being supplied the air flow 33 has a temperature of -5 °C and a relative humidity of 100%, said air being heated in the heater 6 to a temperature of 3 °C and a relative humidity of 55%. This air flow is passed through section 22 of the conveyor belt 10, whereby the quantity of foodstuff present thereon, which has already been largely dried, is in particular cooled down to the temperature at which the product is supplied at 17. This temperature is about 2 °C. The product which at 17 is supplied to the conveyor belt 10 having openings 21, is substantially dried at a temperature of 12 - 15 °C in the first five sections of the conveyor belt indicated at 27 - 23, and cooled down again to the supply temperature, viz. about 2 - 3 °C, in the last part of the conveyor belt 22. Numeral 35 indicates the air leaving the conveyor belt at section 22, which air is supplied, via line 61, to the heater 4 by means of the fan 16. The product to be dried present on section 23 of the belt 10 is dried by means of air from the air flow 33a having a temperature of -5 °C, said air being supplied to the heater 5 and having a temperature of 20 °C and a relative humidity of 25% upon exiting the heater 5. As a result of the low relative humidity the last remainder of moisture is removed from the product to be dried as well as possible, and the air discharged from section 23 of the conveyor belt 10 at 44 is supplied, by means of fan 15, to the heater 3 via the line 62. In the central sections 24 and 25 of the conveyor belt 10 an air flow 37 having a temperature of 25 °C and a relative humidity of 25% is obtained via the line 36 and heater 4, and after drying of the product on section 24 of the belt an air flow 38 is obtained, which at 39 is supplied to the heater 2 by means of fan 14, via line 63. In the heater 2 the air is heated to 27 °C and a relative humidity of 35%, and then passed through the product to be dried on section 26 of the belt 10, after which the air is discharged at 41, the air flow 42 being passed through cooler 7 by means of fan 12, where it is cooled down to 5 °C and a relative humidity of 100%.

The air flow at 45 is passed through the heater 3, whereby an air flow having a temperature of 25 °C and a relative humidity of 25% is obtained, which is passed along and through the product to be dried present on section 25 of the conveyor belt 10, and the cooled-down, more humid air is supplied, via lines 64 and 48, to the heater 1 by means of the fan 13, so that air having a temperature of 27 °C and a relative humidity of 35% is obtained at 49, which is passed through section 27 of conveyor belt 10, resulting in the air flow 50, which is passed through the cooler 7, by means of fan 11, as air having a temperature of 20 °C and a relative humidity of 65%, and supplied to cooler 8 again as a gas flow 19 having a temperature of 5 °C and a relative humidity of 100%, in order for the cycle to be repeated.

Initially the air flows from the fans 15 and 16 do not have the same temperature and humidity, but this air is preferably mixed prior to being passed through the heaters 3 and 4, so that the air supplied to the heaters 3 and 4 has a common temperature of 12°C and a relative humidity of 50%.

Instead of the six fans 11 - 16 used in the embodiment described it is also possible to use fewer fans, for example three, by using six fans, however, it is possible to achieve a more or less perpendicular displacement of the air flow through the product to be dried. This will prevent the occurrence of considerable accelerations in horizontal direction in the air flow, which may result in the product to be dried being blown off locally. The air velocity through or along the product to be dried should preferably be limited to about 2 m/sec., since at a higher air velocity the product is blown off or displaced in an disadvantageous manner, so that an irregular distribution over the belt of the product to be dried results. If the air supplied were to be distributed over six passages at 32a, viz. over the six heaters 1 - 6, the maximum air circulation per hour would be too small to remove the desired amount of moisture from the product. That is why the air flows through the fans are combined in two streams, so that the total amount of air circulating per hour is doubled. By using six independent heaters the temperature and the drying rate can readily be controlled at any point along the belt.

Every product to be dried has its own warming-up time and its own cooling-down time, dependent on the diameter of the particles to be dried. Six different temperatures can be set by the six independent heaters, dependent on the requirements of the product to be dried. Each heater can be controlled separately, therefore. The fact that in the embodiment described the heating capacity is respectively controlled by two streams does not mean that it is not possible to adjust different temperatures for all six heaters.

After the usual slicing and washing freshly sliced vegetables contain 8 - 30% adhering water. In order to obtain an attractive appearance and a satisfactory storage life of the packed, fresh product it is necessary to reduce the amount of adhering water by 60 - 80%.

The above-described system is capable of removing about 140 kg of moisture per hour. After washing, sliced lettuce contains 30% adhering moisture. During drying the amount of adhering moisture is reduced to 6%. The time duration of the lettuce in the drier of the invention is about 15 - 20 minutes. The maximum layer thickness on the conveyor belt is about 12 - 15 cm. All this can be controlled by suitably selecting of the width of the conveyor belt, whereby for the present embodiment a length of about 6 m and a width of 1.3 m have been selected.

The drawing does not show any control equipment for the temperature and humidity measurement equipment, because an expert in this field of the art will be familiar therewith.

It is possible to combine the heaters 3 and 4, as well as the heaters 1 and 2, since these heaters 1, 2 and 3, 4 respectively transmit an equal amount of heat to the gas to be passed therethrough.

The advantages obtained by using this method and this device lie in the fact that with this device there is no loss of product, as is the case with centrifuges. The temperature of the product to be discharged can readily be controlled, which is why the product obtained from the drying plant has about the same temperature as the product to be supplied, and will normally not be higher than 40 °C during the drying process of the invention. Furthermore the method can be carried out continuously, whilst the device is easy to clean, in particular in those places where the product to be dried comes into contact with the device.

## Claims

1. A method for drying solid foodstuffs, comprising the steps of:
a) supplying the foodstuffs to a conveyor belt (10) or shaker conveyor (10),
b) moving said conveyor belt (10) or shaker conveyor (10) carrying said foodstuffs along a plurality of drying locations,
c) supplying a relatively cool drying gas to a first of said drying locations,
d) at said drying location passing the gas through at least one heater (5, 6) in order to adjust its humidity and urging said gas through or along the foodstuffs in a direction substantially perpendicularly to the conveyor belt (10) or shaker conveyor (10) by means of at least one fan (15, 16),
e) supplying said gas to a subsequent drying location and repeating step d) at that location,
f) cooling the gas, removing the absorbed water vapour and redirecting the gas to the first location, and
g) discharging, packing and/or further processing the dried foodstuffs,
the temperature of the drying gas and its humidity decreasing in the direction of movement of said conveyor belt (10) or shaker conveyor (10), and the temperature of the foodstuffs during drying not exceeding 40°C.

2. The method as claimed in claim 1, **characterized in that** the step d) is repeated at least once at a further subsequent location before the drying gas is cooled.

3. The method as claimed in claim 1 or 2, **characterized in that** the first drying location is downstream as seen in the direction of movement of the conveyor belt (10) or shaker conveyor (10), and each subsequent drying location lies upstream of said first location, the temperature of the drying gas at each upstream location being higher than at the adjacent downstream location.

4. The method as claimed in any one of the preceding claims, **characterized in that** the gas is passed through or along the foodstuffs on the conveyor belt (10) or shaker conveyor (10) from the bottom upward, and is transported back under the conveyor belt (10) or shaker conveyor (10) along the outside thereof.

5. The method as claimed in claim 4, **characterized in that** the gas is transported through and along the foodstuffs on the conveyor belt (10) or shaker conveyor (10) along a substantially corkscrew-shaped path.

6. The method as claimed in any one of the preceding claims, **characterized in that** the foodstuffs are dried at the upstream locations and said dried foodstuffs are cooled again at the most downstream location, so that the temperature at which the foodstuff is supplied and the temperature at which the dried foodstuff is discharged are substantially equal.

7. The method as claimed in anyone of the preceding claims, **characterized in that** the gas used is air.

8. A device for carrying out the method as claimed in claim 1, comprising a perforated conveyor belt or shaker conveyor (10) for moving foodstuffs to be dried from a supply end (17) to a discharge end (18) of the device, a plurality of fans (11-16) being arranged adjacent the conveyor belt or shaker conveyor (10) for urging a gas to flow through the conveyor belt or shaker conveyor (10) and a plurality of heaters (1-6) being arranged adjacent the conveyor belt or shaker conveyor (10) and connected to respective fans (11-16) for adjusting the humidity of the gas urged through the conveyor belt or shaker conveyor (10), and a plurality of coolers (7, 8, 9) for cooling the gas after drying and removing the absorbed water vapour therefrom, said coolers (7, 8, 9) being connected by a line (20) to at least one heater (5, 6) arranged at a first drying location and the respective fan (15, 16) cooperating with said heater (5, 6) for urging the gas from the heater (5, 6) through the conveyor belt or shaker conveyor (10) being connected by a return line (61, 62) to at least one further subsequent heater (3, 4) arranged at a subsequent location, said heater (3, 4) being connected via at least one further fan (13, 14) to said coolers (7, 8, 9).

9. The device as claimed in claim 8, **characterized in that** said first drying location is a downstream location adjacent the discharge end (18) of the device, and each said subsequent location is located upstream of said first location.

10. The device as claimed in claim 8 or 9, **characterized in that** said heaters (1-6) are arranged under the conveyor belt or shaker conveyor (10), and the fans (11-16) are arranged over the conveyor belt or shaker conveyor (10) opposite their respective heaters (1-6).

11. The device as claimed in claim 10, **characterized in that** said heaters (1-6) and fans (11-16) are arranged in parallel pairs (1, 2, 11, 12; 3, 4; 13, 14; 5, 6, 16, 16).

## Patentansprüche

1. Verfahren zum Trocknen fester Nahrungsmittel, mit den Schritten:
a) Zuführen der Nahrungsmittel zu einem Förderband (10) oder zu einem Rüttelförderer (10),
b) Bewegen des die Nahrungsmittel tragenden Förderbandes (10) oder Rüttelförderers (10) entlang einer Mehrzahl von Trocknungsorten,
c) Zuführen eines relativ kalten Trocknungsgases zu einem ersten der Trocknungsorte,
d) Durchgehenlassen des Gases an dem Trocknungsort durch mindestens einen Heizer (5, 6) zum Einstellen seiner Feuchtigkeit und Drücken des Gases durch die oder entlang der Nahrungsmittel in einer Richtung im wesentlichen senkrecht zu dem Förderband (10) oder Rüttelförderer (10) mittels mindestens eines Ventilators (15, 16),
e) Zuführen des Gasas zu einem folgenden Trocknungsort und Wiederholen des Schrittes d) an dem Ort,
f) Kühlen des Gases, Entfernen des absorbierten Wasserdampfes und Zurückführen des Gases zu dem ersten Ort und
g) Ausgeben, Verpacken und/oder Weiterverarbeiten der getrockneten Nahrungsmittel,
wobei die Temperatur des Trocknungsgases und seine Feuchtigkeit in der Richtung der Bewegung des Förderbandes (10) oder des Rüttelförderers (10) abnehmen und die Temperatur der Nahrunsmittel während des Trocknens nicht 40°C übersteigt.

2. Verfahren nach Anspruch 1,
dadurch gekennzeichnet, daß der Schritt d) mindestens einmal an einem weiteren folgenden Ort wiederholt wird, bevor das Trocknungsgas gekühlt wird.

3. Verfahren nach Anspruch 1 oder 2,
dadurch gekennzeichnet, daß der erste Trocknungsort stromabwärts, wie es in der Richtung der Bewegung des Förderbandes (10) oder des Rüttelförderers (10) gesehen wird, ist und jeder folgende Trocknungsort stromaufwärts von dem ersten Ort liegt, wobei die Temperatur des Trocknungsgases an jedem stromaufwärtigen Ort früher als an dem benachbarten stromabwärtigen Ort ist.

4. Verfahren nach einem der vorhergehenden Ansprüche,
dadurch gekennzeichnet, daß das Gas durch die oder entlang den Nahrungsmitteln auf dem Förderband (10) oder dem Rüttelförderer (10) von dem Boden nach oben geht und unter dem Förderband (10) oder dem Rüttelförderer (10) entlang der Außenseite davon zurücktransportiert wird.

5. Verfahren nach Anspruch 4,
dadurch gekennzeichnet, daß das Gas durch die und entlang den Nahrungsmitteln auf dem Förderband (10) oder dem Rüttelförderer (10) entlang eines im wesentlichen korkenzieherförmigen Weges transportiert wird.

6. Verfahren nach einem der vorhergehenden Ansprüche, dadurch gekennzeichnet, daß die Nahrungsmittel an den stromaufwärtigen Orten getrocknet werden und die getrockneten Nahrungsmittel wieder an dem stromabwärtigsten Ort gekühlt werden, so daß die Temperatur, mit der das Nahrungsmittel geliefert wird, und die Temperatur, mit der das getrocknente Nahrungsmittel ausgegeben wird, im wesentlichen gleich sind.

7. Verfahren nach einem der vorhergehenden Ansprüche, dadurch gekennzeichnet, daß das benutzte Gas Luft ist.

8. Vorrichtung zum Ausführen des Verfahrens, wie in Anspruch 1 beansprucht ist, mit einem perforierten Förderband oder Rüttelförderer zum Bewegen von zu trocknenden Nahrungsmitteln von einem Zuführende (17) zu einem Ausgabeende (18) der Vorrichtung, wobei eine Mehrzahl von Ventilatoren (11-16) benachbart zu dem Förderband oder Rüttelförderer (10) zum Drücken eines Gases zum Fließen durch das Förderband oder den Rüttelförderer (10) angeordnet sind und eine Mehrzahl von Heizern (1-6) benachbart zu dem Förderband oder Rüttelförderer (10) angeordnet und mit entsprechenden Ventilatoren (11-16) zum Einstellen der Feuchtigkeit des durch das Förderband oder den Rüttelförderer (10) gedrückten Gases verbunden sind, und einer Mehrzahl von Kühlern (7, 8, 9 ) zum Kühlen des Gases nach Trocknen und Entfernen des absorbierten Wasserdampfes davon, wobei die Kühler (7, 8, 9 ) durch eine Leitung (20) mit mindestens einem an einem ersten Trocknungsort angeordneten Heizer (5, 6) verbunden sind und der entsprechende Ventilator (15, 16), der mit dem Heizer (5, 6) zum Drücken des Gases von dem Heizer (5, 6) durch das Förderband oder den Rüttelförderer (10) zusammenwirkt, durch eine Rückkehrleitung (61, 62) mit mindestens einem weiteren folgenden Heizer (3, 4) verbunden ist, der an einem folgenden Ort angeordnet ist, wobei der Heizer (3, 4) über mindestens einen weiteren Ventilator (13, 14) mit den Kühlern (7, 8, 9) verbunden ist.

9. Vorrichtung nach Anspruch 8,
dadurch gekennzeichnet, daß der erste Trocknungsort ein stromabwärtigar Ort benachbart zu dem Ausgabeende (18) der Vorrichtung ist und jeder folgende Ort stromaufwärts von dem ersten Ort angeordnet ist.

10. Vorrichtung nach Anspruch 8 oder 9,
dadurch gekennzeichnet, daß Heizer (1-6) unter dem Förderband oder Rüttelförderer (10) angeordnet sind und die Ventilatoren (11, 16) über dem Förderband oder Rüttelförderer (10) gegenüber zu ihren entsprechenden Heizern (1-6) angeordnet sind.

11. Vorrichtung nach Anspruch 10,
dadurch gekennzeichnet, daß die Heizer (1-6) und Ventilatoren (11-16) in parallelen Paaren (1, 2, 11, 12; 3, 4; 13, 14; 5, 6, 15, 16) angeordnet sind.

## Revendications

1. Procédé de dessiccation de produits alimentaires solides, comprenant les étapes consistant à :
a) placer les produits alimentaires sur une bande transporteuse (10) ou un convoyeur à secousses (10),
b) déplacer ladite bande transporteuse (10) ou ledit convoyeur à secousses (10) portant lesdits produits alimentaires le long d'une pluralité d'emplacements de dessiccation,
c) envoyer un gaz de dessiccation relativement froid dans un premier desdits emplacements de dessiccation,
d) au niveau dudit emplacement de dessiccation, faire passer le gaz au travers d'au moins un réchauffeur (5, 6) de manière à régler son humidité, et pousser ledit gaz au travers ou le long des produits alimentaires dans une direction sensiblement perpendiculaire à la bande transporteuse (10) ou au convoyeur à secousses (10) au moyen d'au moins un ventilateur (15, 16),
e) envoyer ledit gaz dans un emplacement de dessiccation suivant et répéter l'étape d) à cet emplacement,
f) refroidir le gaz, éliminer la vapeur d'eau absorbée et renvoyer le gaz vers le premier emplacement, et
g) évacuer, emballer et/ou soumettre à des traitements ultérieurs les produits alimentaires séchés,
la température du gaz de dessiccation et son humidité diminuant dans le sens du cheminement de ladite bande transporteuse (10) ou dudit convoyeur à secousses (10), et la température des produits alimentaires durant la dessiccation n'excédant pas 40°C.

2. Procédé selon la revendication 1, caractérisé en ce que l'étape d) est répétée au moins une fois au niveau d'un emplacement suivant, avant que le gaz de dessiccation ne soit refroidi.

3. Procédé selon la revendication 1 ou 2, caractérisé en ce que le premier emplacement de dessiccation se trouve en aval lorsqu'on regarde dans le sens du cheminement de la bande transporteuse (10) ou du convoyeur à secousses (10), et en ce que chaque poste de dessiccation suivant se trouve en amont dudit premier emplacement, la température du gaz de dessiccation au niveau de chaque emplacement amont étant plus élevée qu'au niveau de l'emplacement aval adjacent.

4. Procédé selon l'une quelconque des revendications qui précèdent, caractérisé en ce que le gaz est envoyé au travers ou le long des produits alimentaires se trouvant sur la bande transporteuse (10) ou le convoyeur à secousses (10) de bas en haut, et est renvoyé sous la bande transporteuse (10) ou le convoyeur à secousses (10) le long de l'extérieur de celle-ci ou de celui-ci.

5. Procédé selon la revendication 4, caractérisé en ce que le gaz est acheminé au travers et le long des produits alimentaires placés sur la bande transporteuse (10) ou le convoyeur à secousses (10), selon une trajectoire sensiblement en forme de tire-bouchon.

6. Procédé selon l'une quelconque des revendications qui précèdent, caractérisé en ce que les produits alimentaires sont séchés au niveau des emplacements amont et en ce que lesdits produits alimentaires séchés sont à nouveau refroidis au niveau de l'emplacement situé le plus en aval, de sorte que la température à laquelle les produits alimentaires sont introduits et la température à laquelle les produits alimentaires séchés sont évacués, sont sensiblement égales.

7. Procédé selon l'une quelconque des revendications qui précèdent, caractérisé en ce que le gaz utilisé est de l'air.

8. Dispositif destiné à mettre en oeuvre le procédé selon la revendication 1, comprenant une bande transporteuse ou un convoyeur à secousses perforé (10) destiné à acheminer les produits alimentaires à sécher d'une extrémité d'entrée (17) vers une extrémité de sortie (18) du dispositif, une pluralité de ventilateurs (11-16) étant disposés de manière adjacente à la bande transporteuse ou au convoyeur à secousses (10), pour forcer un gaz à s'écouler au travers de la bande transporteuse ou du convoyeur à secousses (10), et une pluralité de réchauffeurs (1-6) étant disposés de manière adjacente à la bande transporteuse ou au convoyeur à secousses (10) et raccordés aux ventilateurs respectifs (11-16) pour régler l'humidité du gaz poussé au travers de la bande transporteuse ou du convoyeur à secousses (10), et une pluralité de refroidisseurs (7, 8, 9) destinés à refroidir le gaz après la dessiccation et à éliminer la vapeur d'eau absorbée de celui-ci, lesdits refroidisseurs (7, 8, 9) étant reliés par une ligne (20) à au moins un réchauffeur (5, 6) disposé au niveau du premier emplacement de dessiccation, et le ventilateur (15, 16) respectif coopérant avec ledit réchauffeur (5, 6) pour faire passer le gaz provenant du réchauffeur (5, 6) au travers de la bande transporteuse ou du convoyeur à secousses (10) étant raccordé par une ligne de retour (61, 62) à au moins un autre réchauffeur suivant (3, 4) disposé au niveau d'un emplacement suivant, ledit réchauffeur (3, 4) étant raccordé par l'intermédiaire d'au moins un autre ventilateur (13, 14) auxdits refroidisseurs (7, 8, 9).

9. Dispositif selon la revendication 8, caractérisé en ce que ledit premier emplacement de dessiccation est un emplacement aval adjacent à l'extrémité de sortie (18) du dispositif et en ce que chaque emplacement suivant est placé en amont dudit premier emplacement.

10. Dispositif selon la revendication 8 ou 9, caractérisé en ce que lesdits réchauffeurs (1-6) sont disposés sous la bande transporteuse ou le convoyeur à secousses (10) et en ce que les ventilateurs (11-16) sont disposés au-dessus de la bande transporteuse ou du convoyeur à secousses (10), à l'opposé de leurs réchauffeurs (1-6) respectifs.

11. Dispositif selon la revendication 10, caractérisé en ce que lesdits réchauffeurs (1-6) et les ventilateurs (11-16) sont disposés en paires parallèles (1, 2, 11, 12 ; 3, 4, 13, 14 ; 5, 6, 16, 16).
